Europäisches Patentamt

European Patent Office

Office européen des brevets

(19)

(11) Publication number: **0 446 949 A1**

## (12) EUROPEAN PATENT APPLICATION

(21) Application number: **91104059.0**

(22) Date of filing: **15.03.91**

(51) Int. Cl.5: **G02F 1/13, G02B 27/00, G02B 26/06**

(30) Priority: **16.03.90 JP 65600/90**

(43) Date of publication of application:
**18.09.91 Bulletin 91/38**

(84) Designated Contracting States:
**DE GB**

(71) Applicant: **Citizen Watch Co. Ltd.**
**1-1, 2-chome, Nishi-Shinjuku**
**Shinjuku-ku Tokyo(JP)**

(72) Inventor: **Hashimoto, Nobuyuki,**
**Gijutsukenkyujo Citizen**
**Watch Co., Ltd., 840, Azatakeno,**
**Oazashimotomi**
**Tokorozawa-shi, Saitama-Pref.(JP)**

(74) Representative: **Patentanwälte Grünecker,**
**Kinkeldey, Stockmair & Partner**
**Maximilianstrasse 58**
**W-8000 München 22(DE)**

(54) System for correcting an aberration in an optical system.

(57) An optical system has an image producing element (7), and an aberration detector (13,17) for detecting an aberration in the optical system for producing a correcting signal. A transparent liquid crystal panel (5) is provided in the optical system. The liquid crystal panel has a plurality of pixels arranged in the form of a matrix. The correcting signal is applied to electrodes (9) of the pixels for changing the refractive index in the pixel for correcting the aberration.

# FIG.1

## BACKGROUND OF THE INVENTION

The present invention relates to an optical system such as a camera, telescope, and liquid crystal projector, and more particularly to a system for correcting an aberration in the optical system such as an image production optics and an image detection optics.

In a conventional optical system, size and refractive index of an optical element, such as a lens, prism and reflecting mirror, is fixed so as to obtain the best clear image or picture under a specific condition. However, in particular, in a high resolution astronomical telescope system, since fluctuation of air density in the atmosphere, such as fluctuation of an optical path, is large, aberration occurs because of the turbulence in direction and phase of the transmitting light ray. Therefore, it is necessary to correct the aberration for obtaining the best image.

Fig. 4 shows a conventional optical system. The incident rays 1 are affected by fluctuation 3 so that the rays 1 can not converge on a point by an image producing lens 7. Thus, a sharply focused image can not be formed.

"Applied Optics", volume 28, No. 24, 15 December 1989, pages 5326 to 5332 discloses an optical system having a segmented mirror system for solving the above described problem.

Figs. 5a and 5b show such an aberration control system with a segmented mirror. As shown in Fig. 5a, a segmented mirror 27 comprises seven hexagonal segments 29. The angular disposition of each segment with respect to the light rays can be changed by actuators (not shown). As shown in Fig. 5b, the segmented mirror 27 is disposed before the image producing lens 7.

The optical system is provided with an image detecting device 13a for detecting an image obtained by the lens 7 and producing a picture signal 15a which is applied to an arithmetic device 17a. The picture signal 15a includes information of fluctuation of the optical path in the atmosphere. The arithmetic device 17a produces a correcting signal 19a which is applied to a mirror driving circuit 31. The mirror driving circuit 31 produces a mirror driving signal 33 which is applied to the actuators of the segmented mirror 27 for controlling the position of each segment 29.

When the incident rays 1 are affected by the fluctuation 3 of the atmosphere, the advancing direction and the phase (wavefront) of the incident rays 1 are disturbed. The incident rays 1 disturbed by the fluctuation 3 are reflected on the segment 29. In accordance with the mirror driving signal 33, the actuator controls the position of each segment 29 for correcting the aberration caused by the disturbance of the incident ray 1.

However, the system is provided with a plurality of actuators and motors for operating the actuators. Consequently, the system is complicated in construction, which causes the response of the system to reduce. If the segments are suddenly moved, the segments may be deformed. Further, such a system can not be used in an optical system of a light ray transmitting type.

## SUMMARY OF THE INVENTION

The object of the present invention is to provide an optical system which may correct the aberration with a simple system having a good response, and may be available for various types of optical systems.

According to the present invention, there is provided a system for correcting an aberration in an optical system having an image producing element, aberration detecting means for detecting the aberration in the optical system for producing a correcting signal, correcting means responsive to the correcting signal for correcting the aberration.

The correcting system comprises the correcting means including a liquid crystal panel as a spatial light modulator, the liquid crystal panel having a plurality of pixels arranged in the form of a matrix layer, each of pixels having an individually driven electrode, driving means responsive to the correcting signal for producing a driving signal which is applied to selected electrodes for changing refractive index of each pixel so as to correct the aberration.

In an aspect of the invention, the liquid crystal panel is transparent, and disposed at either of an entrance pupil, exit pupil or iris or stop of the optical system.

The system further comprises a polarizer disposed in front of the liquid crystal panel, the liquid crystal panel being aligned in the same direction as the polarizer.

These and other objects and features of the present invention will become more apparent from the following detailed description with reference to the accompanying drawings.

## BRIEF DESCRIPTION OF DRAWINGS

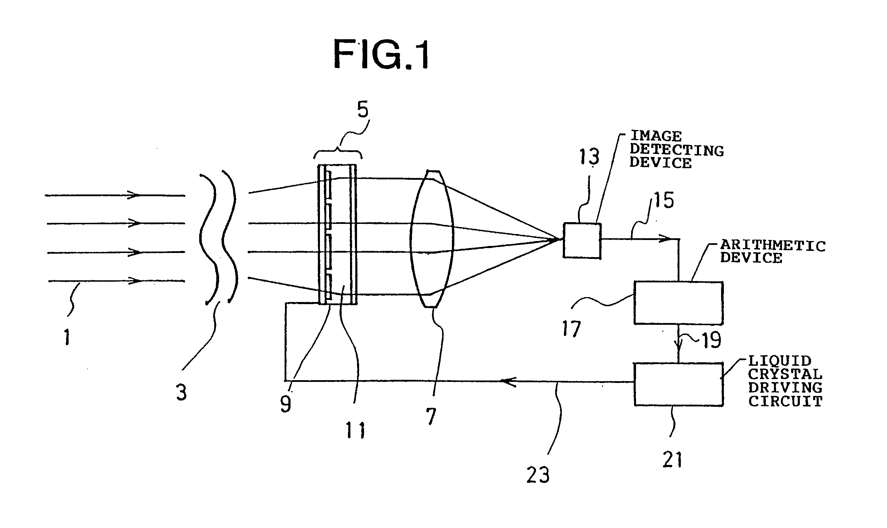

Fig. 1 is a schematic diagram showing an optical system according to the present invention;

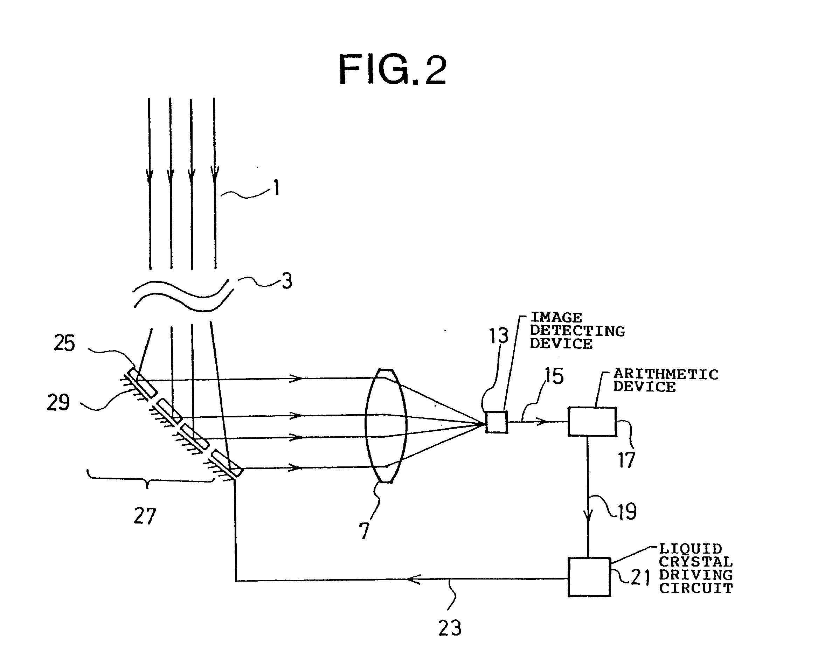

Fig. 2 is a schematic diagram showing a second embodiment of the present invention;

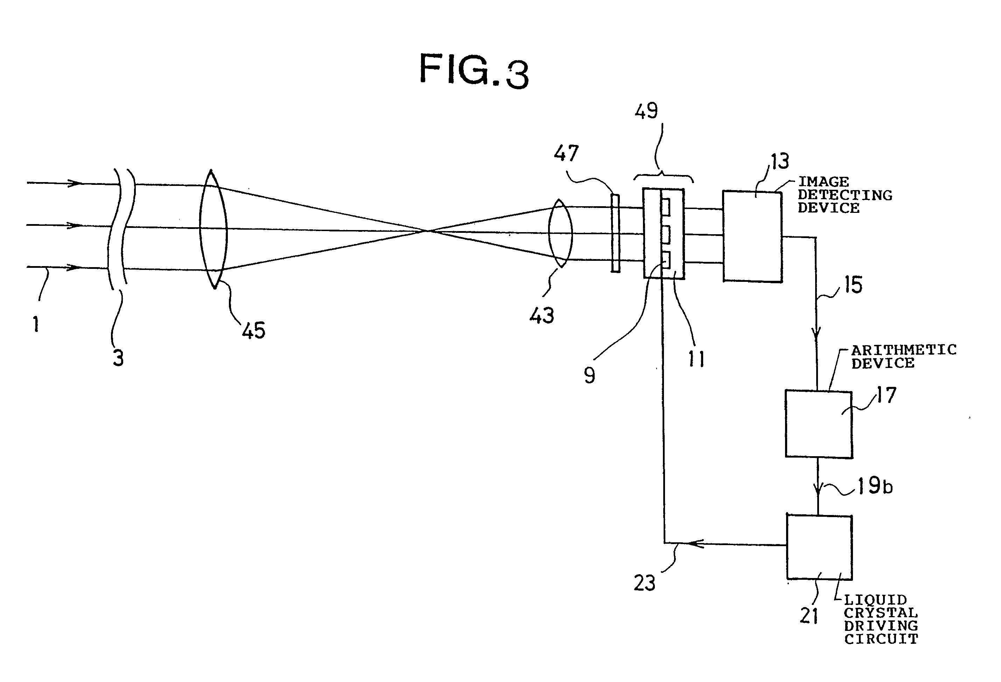

Fig. 3 is a schematic diagram showing a third embodiment of the present invention;

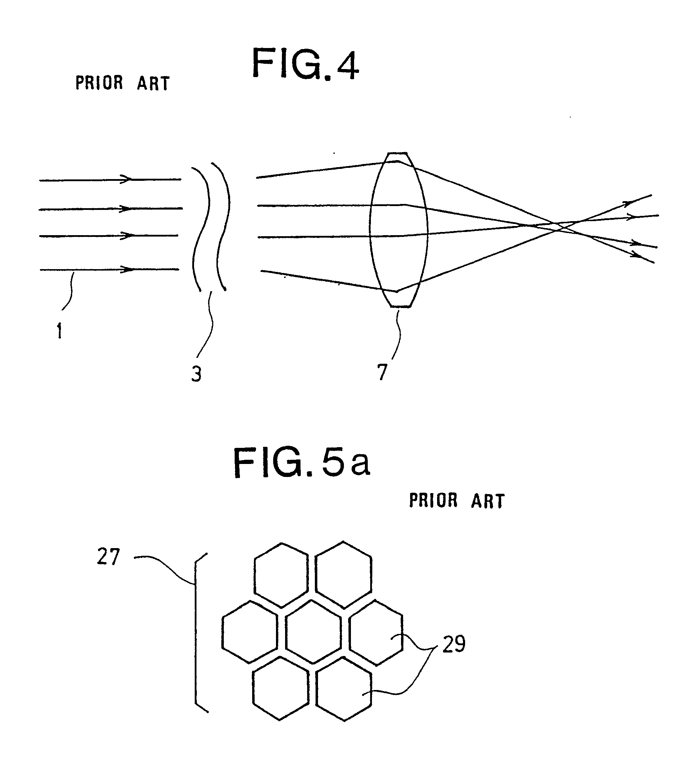

Fig. 4 is a schematic diagram of a conventional optical system;

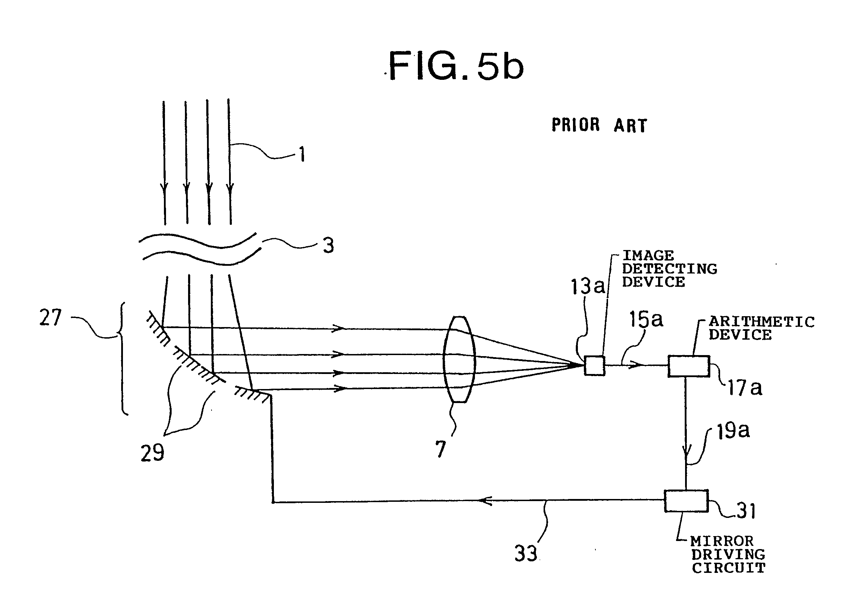

Figs. 5a and 5b are schematic diagrams showing a conventional aberration control system; and

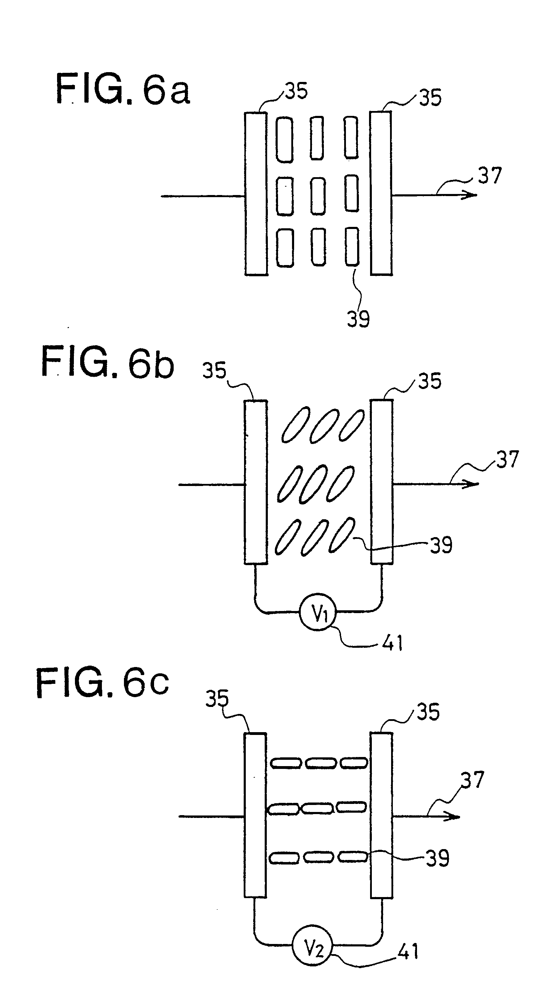

Figs. 6a to 6c are illustrations for explaining the controlling of refraction index in a liquid crystal cell.

DETAILED DESCRIPTION OF THE PREFERRED EMBODIMENTS

Referring to Fig. 1, an optical system of the present invention has the image producing lens 7, and a transparent liquid crystal panel 5 disposed before the lens 7 for correcting the aberration in the system. The liquid crystal panel 5 comprises a liquid crystal material 11 sealed between opposite transparent plates and a plurality of individual electrodes 9 for pixels and a common electrode (not shown) opposite the individual electrode. The pixels are arranged in the form of a matrix.

It is desirable to dispose the liquid crystal panel. 5 at the entrance pupil, the exit pupil, or a stop position provided in the optical system, or adjacent either of them. Since the image has the Fourier transformation relation to the pupil function, the pupil function can be easily determined by the image, which will be described hereinafter.

Referring to Figs. 6a to 6c, the controlling of refractive index in a liquid crystal cell will be described hereinafter. A liquid crystal material having a plurality of molecules 39 which are parallelly aligned is sealed between opposite conductive films 35.

Fig. 6a shows the liquid crystal cell to which no voltage is applied. The long axis of each liquid crystal molecule 39 is approximately perpendicular to an optical axis 37.

In Fig. 6c, a sufficient large voltage $V_2$ is applied from a source 41 to the liquid crystal molecules 39 in the cell through conductive films 35. The long axis of each. molecule 39 is parallel with the optical axis 37.

As shown in Fig. 6b, if a lower voltage $V_1$ than voltage $V_2$ is applied, the molecules 39 are arranged in an intermediate position between the positions of Figs. 6a and 6c.

The refractive index in the liquid crystal cell is inherently determined with the type of the cell. For example, in a nematic liquid crystal cell, the refractive index in the direction of the long axis is larger than that of the short axis direction. The refractive index of the light wave in the optical axis direction increases from Figs. 6a to Fig. 6c. The angle of refraction of the light changes with the refractive index in accordance with the Snell's law. Namely, the advancing direction of the light, from a point of view of the geometric optics can be changed, and hence the phase of the light wave from a point of view of the wave optics, can be changed by changing the refractive index.

In order to detect and correct the aberration, the optical system is provided with an image detecting device 13, an arithmetic device 17, a liquid crystal driving circuit 21 connected to the arithmetic device 17, for driving the pixel electrodes 9 in the liquid crystal panel 5.

The parallel incident rays 1 from the infinity encounter the image producing lens 7 through the transparent liquid crystal panel 5 to converge to form an image at a point. However, the advancing directions and the phases of the rays 1 are partly disturbed by the fluctuation 3. The system of the present invention gives a proper refractive index distribution to the liquid crystal material 11 through the electrodes 9 for partly changing the direction and phase of the ray 1 transmitting the panel 5 so as to compensate the aberration, thereby converging the rays 1 on a point by the lens 7 for obtaining a clear image.

Describing the correction of the aberration, if a well known picture such as a star is detected in an image formed by the image detecting device 13, a picture signal 15 based on the known picture is applied to the arithmetic device 17. The arithmetic device 17 compares the picture signal 15 with an accurate reference picture signal for the formed known picture. From the comparison, the arithmetic device 17 calculates the deviation of the phase of the light wave at a point on the optical path such as the position of the entrance pupil or the exit pupil, so that the magnitude of the aberration can be obtained. A correcting signal 19 is applied to the liquid crystal driving circuit 21. The circuit 21 produces a liquid crystal driving signal 23 which is applied to the pixel electrodes 9 in the liquid crystal panel 5 for correcting the refractive index in each pixel in the panel 5. Thus, the deviation of the phase of the light wave transmitting each pixel is independently corrected, thereby correcting the aberration.

If a known picture is not detected, such a method that the spatial frequency of the image becomes the largest value is used. If a detected aberration does not change with time, a correcting data for the aberration is stored in a memory.

Referring to Fig. 2 showing the second embodiment of the present invention, an optical system is provided with the segmented mirror 27 comprising a plurality of hexagonal segments 29. A liquid crystal single cell 25 is secured to each of the segments 29 for correcting the aberration. Thus, the segmented mirror 27 is served as a reflection type liquid crystal panel. The refractive index in each cell 25 is controlled in the same manner as the first embodiment, thereby controlling the angle of refraction and phase of the ray.

Alternatively, a liquid crystal panel of the reflective type having a plurality of pixels can be used.

Fig. 3 shows the third embodiment which is designed for observing the earth from an artificial satellite with a telescope mounted thereon.

In the first and second embodiments of Figs. 1 and 2, the optical systems are described based on the geometric optics in for easily understanding the conception of the invention. However, actually, it is important to correct the aberration caused by fluctuation of the phase. Accordingly, the third embodiment will be described based on the wave optics.

The optical system of the telescope comprises an objective 45, an eyepiece 43, a parallelly aligned liquid crystal panel 49 provided behind the eyepiece 43, interposing a polarizer 47. The liquid crystal panel 49 is aligned in the same direction as the polarizing direction of the polarizer 47. Consequently, the component which does not coincide with the alignment direction is cut, so that the signal-to-noise ratio (SNR) is improved.

In accordance with the liquid crystal driving signal 23 from the liquid crystal driving circuit 21, the refractive index in the liquid crystal is controlled. The phases of the rays transmitting the panel 49 are partly controlled, thereby correcting the aberration.

Describing more in detail, if the phase of the light ray transmitting a pixel P in the panel 49 is deflected by $\Delta\psi$ because of the aberration generated in the optical path of the optical system, the value $\Delta\psi$ and the position of the pixel P are calculated or inferred in the devices 13 and 17 to produce a correcting signal 19b. The correcting signal 19b is applied to the liquid crystal driving circuit 21. In accordance with the signal 23 from the circuit 21, the refractive index in the pixel P is changed by $\Delta n$ so as to satisfy $\Delta nd = -\Delta\psi$, where d is the thickness of the liquid crystal layer material 11 of the panel 49.

In the calculation of the condition of the light wave at the position of the entrance pupil or the exit pupil, the pupil function has a relation of the Fourier transformation with respect to the complex amplitude distribution of the image. Generally, the image detecting device can detect the luminous intensity of the light wave, but can not detect the phase. Consequently, the pupil function can not be obtained by the Fourier transformation of the amplitude distribution of the image detected by the image detecting device. Therefore, it is necessary to obtain the phase from the amplitude distribution of the image. There are various methods for obtaining the phase, for example an algorithm by Gerchberg Saxton (Optik, volume 34, 1971, page 275) and a zero-point method by Honders (Journal of Mathematical Physics, volume 16, 1975, page 1719).

In accordance with the present invention, it is possible to successively correct the aberration generated in the optical system because of the fluctuation of the atmosphere. Further, it is possible to correct the aberration due to optical elements such as s lens and a mirror in the optical system. Conveniently, the liquid crystal panel is disposed at the position of the exit pupil.

It is necessary to control the phase of the light wave with a very small value less than the wavelength, that is the order of the submicron. It is difficult to mechanically move the segmented mirror of the prior art shown in Fig. 5b with such a small value. In the system of the present invention, since the refractive index in the liquid crystal cell is electronically changed, the phase of the light wave can be easily controlled. In the liquid crystal display panel having about 250,000 pixels, the phase of the light wave can be controlled about $\pi$ to $2\pi$ at the response time of 50 to 100 ms.

The system of the present invention can be effectively employed in an optical system provided in liquid, or in an optical system provided in a laser beam printer or a measuring device each having a heater in or near the optical path, for correcting the phase of the optical path.

In the above described system of the present invention, the aberration detecting system and the correcting system are provided in one optical system. Alternatively, two optical systems are separately provided for the detecting system and the correcting system.

While the invention has been described in conjunction with preferred specific embodiments thereof, it will be understood that this description is intended to illustrate and not limit the scope of the invention, which is defined by the following claims.

## Claims

1. A system for correcting an aberration in an optical system having an image producing element, aberration detecting means for detecting the aberration in the optical system for producing a correcting signal, correcting means responsive to the correcting signal for correcting the aberration, the correcting system comprising:

    said correcting means including a liquid crystal panel as a spatial light modulator,

    the liquid crystal panel having a plurality of pixels arranged in the form of a matrix, each of pixels having an individually driven electrode;

    driving means responsive to the correcting signal for producing a driving signal which is applied to selected electrodes for changing refractive index of each pixel so as to correct the aberration.

2. The system according to claim 1 wherein the liquid crystal panel is transparent.

3. The system according to claim 1 wherein the liquid crystal panel is disposed at either of an entrance pupil, exit pupil or stop of the optical system.

4. The system according to claim 1 further comprising a polarizer disposed in front of the liquid crystal panel, the liquid crystal panel being aligned in the same direction as the polarizer.

# FIG.1

IMAGE
DETECTING
DEVICE

ARITHMETIC
DEVICE

LIQUID
CRYSTAL
DRIVING
CIRCUIT

EP 0 446 949 A1

# FIG.2

EP 0 446 949 A1

# FIG.3

EP 0 446 949 A1

# FIG.4

PRIOR ART

# FIG.5a

PRIOR ART

# FIG.5b

# FIG. 6a

# FIG. 6b

# FIG. 6c

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | SOVIET JOURNAL OF QUANTUM ELECTRONICS vol. 16, no. 4, April 1986, pages 471-474, New York, US; VASIL'EV et al.: "Wavefront Correction by Liquid-Crystal Devices" * page 472, right-hand column - page 473, left-hand column; figure 2 * | 1,2 | G 02 F 1/13 G 02 B 27/00 G 02 B 26/06 |
| Y | US-A-4 572 616 (KOWEL et al.) * column 2, lines 9-42; column 8, lines 12-27; figures 3,4,7,8 * | 1,2 | |
| Y | WO-A-8 505 466 (KERN) * page 13, last paragraph; page 17, last paragraph - page 18; page 21, lines 11-14; figures 1,2 * | 1,2 | |
| P,X | US-A-4 943 709 (GRINBERG et al.) * column 5, line 24 - column 6, line 23; figures 1,2,6 * | 1,2 | |
| P,A | | 4 | |

| TECHNICAL FIELDS SEARCHED (Int. Cl.5) |
|---|
| G 02 F 1/00 G 02 B 26/00 G 02 B 27/00 |

The present search report has been drawn up for all claims

| Place of search | Date of completion of search | Examiner |
|---|---|---|
| Berlin | 14 May 91 | VON MOERS F |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document